# FASCICULE DE BREVET EUROPEEN

(11) **EP 1 436 197 B1**
(45) Date de publication et mention de la délivrance du brevet: **14.06.2006**
(21) Numéro de dépôt: 02783228.6
(22) Date de dépôt: 30.09.2002
(51) Int. Cl.: B64G 1/50, G02B 5/08

(54) **REFLECTEUR OPTIQUE DE SURFACE, POUR UN ENGIN SPATIAL TEL QU'UN SATELLITE GEOSTATIONNAIRE**
OPTISCHER OBERFLÄCHENREFLEKTOR FÜR RAUMFAHRZEUG, WIE ZUM BEISPIEL EINEN GEOSTATIONÄREN SATELLITEN
SURFACE OPTICAL REFLECTOR, FOR SPACE CRAFT SUCH AS A GEOSTATIONARY SATELLITE

(30) Priorité: 08.10.2001 FR 0112909
(43) Date de publication de la demande: 14.07.2004
(73) Titulaire: ALCATEL, 75008 Paris (FR)
(72) Inventeur: MAUREL, Gilles, F-06110 Le Cannet (FR)
(74) Mandataire: Smith, Bradford Lee
(86) Numéro de dépôt international: PCT/FR2002/003325
(87) Numéro de publication internationale: WO 2003/042038

(56) Documents cités:
- EP-A- 0 930 231
- US-A- 3 671 286
- US-A- 5 400 986
- US-A- 5 888 618

## Description

### Domaine technique

L'invention concerne un réflecteur optique de surface, destiné à être monté sur un engin spatial tel qu'un satellite géostationnaire pour assurer son contrôle thermique.

### Etat de la technique

Pour assurer le contrôle thermique des satellites, et notamment des satellites géostationnaires, il est d'usage de les équiper de réflecteurs optiques de surface, généralement appelés OSR (de l'anglais "Optical Surface Reflectors") lorsqu'ils sont réalisés en verre revêtu d'argent sur leur face tournée vers le satellite.

Les réflecteurs optiques de surface sont des panneaux transparents aux rayonnements infrarouges, habituellement plans, dont la surface tournée vers le satellite est métallisée. Ils sont destinés à réfléchir presque intégralement la lumière solaire incidente tout en présentant une capacité radiative aussi élevée que possible, notamment dans le domaine infrarouge. En d'autres termes, les réflecteurs optiques de surface assurent l'évacuation de la chaleur produite par certains des équipements embarqués sur les satellites et garantissent ainsi leur contrôle thermique.

Sur certains engins spatiaux tels que les satellites géostationnaires et les satellites en orbite basse de type héliosynchrone, l'obtention d'un contrôle thermique satisfaisant impose l'utilisation de réflecteurs optiques de surface présentant une capacité radiative élevée et, par conséquent, une surface importante.

Dans l'état actuel de la technique, la seule solution connue pour parvenir à ce résultat consiste à doter les satellites de réflecteurs déployables, formés de plusieurs panneaux articulés.

Toutefois, cette solution présente des inconvénients notables. Ainsi, l'utilisation de réflecteurs déployables a notamment pour conséquence d'augmenter sensiblement la masse et le volume des satellites. De plus, cela se traduit par la présence de mécanismes dont le fonctionnement dans le vide constitue un risque en termes de fiabilité.

Par ailleurs, il est connu d'accroître l'émissivité thermique des corps noirs en réalisant leur paroi sous la forme d'un réseau pyramidal constitué par la juxtaposition d'un grand nombre de petites surfaces triangulaires inclinées par rapport au plan de ladite paroi. Toutefois, il n'existe pas dans ce cas de contrainte liée à la nécessité de ne pas absorber la lumière solaire incidente.

Enfin, le document EP-A-0 930 231 décrit une interface entre un composant émettant de la chaleur et un plateau support, sur un satellite. Cette interface est composée de bandes métalliques juxtaposées, dont chacune présente initialement des protubérances de formes pyramidales ou hémisphériques. La fixation du composant sur le plateau support a pour effet d'écraser ces protubérances. On assure ainsi un contact superficiel amélioré entre les pièces et par conséquent, une meilleure évacuation de la chaleur vers le plateau support, par conduction.

### Exposé de l'invention

L'invention a précisément pour objet un réflecteur optique de surface pour un engin spatial, dont la conception originale lui permet d'accroître la capacité radiative de l'engin tout en maintenant sensiblement inchangé le coefficient d'absorption de la lumière solaire, en minimisant l'augmentation de masse et de volume et en évitant l'adjonction de mécanismes susceptibles d'affecter la fiabilité du radiateur.

Conformément à l'invention, ce résultat est obtenu grâce à un réflecteur optique de surface apte à former une paroi extérieure d'engin spatial, comprenant une surface extérieure prévue pour être tournée vers l'espace et une surface intérieure prévue pour être tournée vers l'engin, caractérisé en ce que la surface extérieure comprend une pluralité de facettes, inclinées les unes par rapport aux autres et par rapport à ladite surface intérieure.

Il est à noter que le terme "facettes" doit être compris dans l'ensemble du texte comme désignant des zones superficielles distinctes de dimensions finies, quelle que soit leur taille. Ainsi, les dimensions des facettes peuvent être millimétriques, décimétriques ou de taille intermédiaire, sans sortir du cadre de l'invention.

La réalisation de la surface extérieure du réflecteur optique sous la forme de facettes inclinées permet d'augmenter de 12 à 15% la surface radiative sans accroître significativement la masse et le volume du réflecteur. De plus, cet agencement permet d'éviter le recours à des mécanismes de déploiement.

Les angles formés entre les facettes adjacentes sont choisis en fonction des angles d'incidence des rayons solaires susceptibles de venir heurter le réflecteur, c'est-à-dire en fonction de l'orientation prévue pour ledit réflecteur sur le satellite, afin que les rayons solaires ne subissent qu'une seule réflexion sur les facettes du réflecteur.

Avantageusement, chacune des facettes comprend une couche de matériau transparent aux rayonnements infrarouge, dont une face intérieure prévue pour être tournée vers l'engin spatial est recouverte par une couche de métallisation.

Dans ce cas, chacune des facettes comprend de préférence une couche de métallisation choisie dans le groupe comprenant l'argent et l'aluminium.

De façon optionnelle, chacune des facettes comprend de plus une couche de matériau transparent au spectre solaire, tel que du verre.

Les facettes sont fixées sur un substrat servant de support intérieur , réalisé en un matériau choisi dans le groupe comprenant le verre et le polytétrafluoréthylène.

Pour faciliter leur fabrication, les facettes sont, de préférence, sensiblement planes.

Avantageusement, les facettes forment alors des éléments saillants à base polygonale, disposés selon un réseau régulier sur ladite surface extérieure.

Dans ce cas, la base polygonale des éléments saillants est choisie dans le groupe comprenant les triangles équilatéraux, les carrés, les rectangles, les losanges et les hexagones réguliers.

Dans le mode de réalisation préféré de l'invention, les éléments saillants sont alors des pyramides à base carrée.

Dans le cas optimal où l'orientation du est telle que les rayons solaires peuvent le heurter avec un angle d'incidence compris entre 45° et 90° par rapport à la normale locale à la surface intérieure du réflecteur, l'angle au sommet des pyramides est de 90°.

Dans le cas d'un satellite géostationnaire équipé d'un réflecteur dont l'orientation est telle que les rayons solaires peuvent le heurter avec un angle d'incidence compris entre 60° et 90° par rapport à la normale locale à la surface intérieure du réflecteur, l'angle au sommet des pyramides est de 60°.

Enfin, dans le cas où l'orientation du réflecteur est telle que les rayons solaires peuvent le heurter avec un angle d'incidence compris entre 30° et 90° par rapport à la normale locale à la surface intérieure du réflecteur, l'angle au sommet des pyramides est de 120°.

### Brève description des dessins

On décrira à présent, à titre d'exemples illustratifs et nullement limitatifs, plusieurs modes de réalisation préférés de l'invention, en se référant aux dessins annexés, dans lesquels :
- la figure 1 est une vue en coupe transversale qui représente schématiquement un réflecteur optique de surface conforme à l'invention ;
- la figure 2 est une vue de dessus, en perspective, illustrant un premier mode de réalisation de l'invention, dans lequel la surface extérieure du réflecteur est formée de pyramides à bases carrées juxtaposées ;
- la figure 3 est une vue de dessus, illustrant un deuxième mode de réalisation de l'invention, dans lequel la surface extérieure du réflecteur est formée de pyramides à bases triangulaires juxtaposées ; et
- la figure 4 est une vue comparable à la figure 3, illustrant un troisième mode de réalisation de l'invention, dans lequel la surface extérieure du réflecteur est formée de pyramides à bases hexagonales juxtaposées.

### Description détaillée de modes de réalisation préférés de l'invention

Un réflecteur optique de surface conforme à l'invention constitue un panneau rigide destiné à former une paroi extérieure d'un engin spatial tel qu'un satellite géostationnaire ou un satellite en orbite basse de type héliosynchrone.

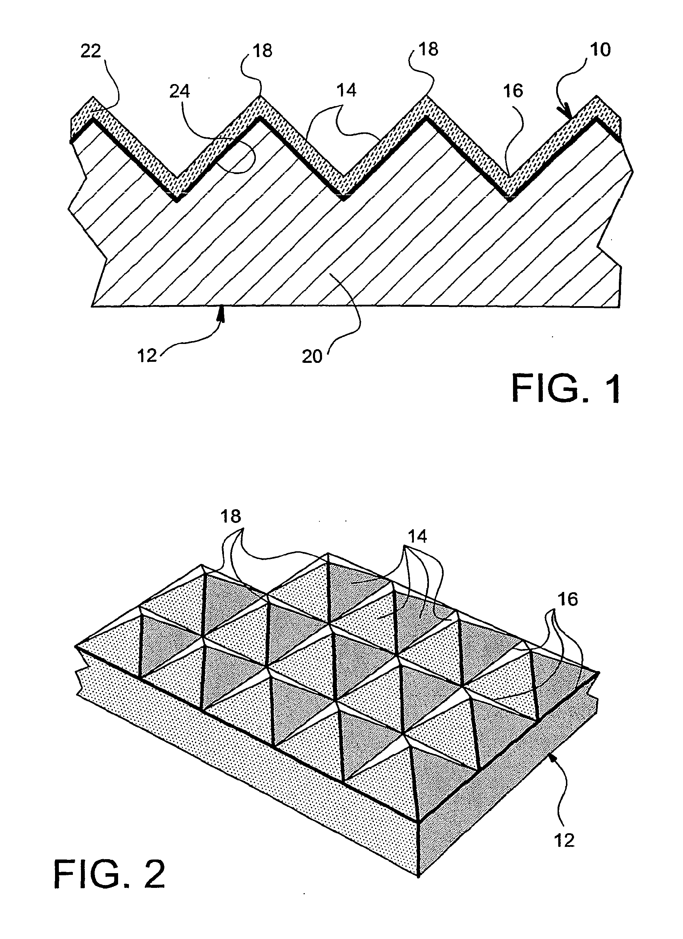

Comme l'illustre très schématiquement la figure 1, un tel panneau comporte donc une surface extérieure 10 prévue pour être tournée vers l'espace et en contact direct avec le vide spatial, ainsi qu'une surface intérieure 12 prévue pour être tournée vers l'engin spatial équipé dudit réflecteur.

Le réflecteur optique de surface conforme à l'invention a pour fonctions, d'une part, d'assurer une émissivité thermique maximale de l'intérieur du satellite vers l'extérieur, notamment dans le domaine des rayonnements infrarouges et, d'autre part, de réfléchir la majeure partie de la lumière solaire incidente qui vient heurter la surface extérieure 10.

Pour améliorer l'émissivité thermique sans avoir recours à des réflecteurs déployables, il est proposé conformément à l'invention de réaliser la surface extérieure 10 sous la forme d'une pluralité de facettes 14 juxtaposées.

Dans les modes de réalisation préférés de l'invention illustrés sur les figures, le réflecteur optique présente une configuration générale sensiblement plane. En d'autres termes, la surface intérieure 12 du réflecteur est plane et sa surface extérieure 10, considérée dans son ensemble, c'est-à-dire au niveau de la base 16 de chacune des facettes 14, est également plane. Il est à noter que l'invention n'est pas limitée à cet agencement et couvre également le cas où le réflecteur optique présente une certaine courbure dans une ou deux directions. Dans la description qui suit, la normale au plan du réflecteur ou à la surface intérieure de celui-ci correspond alors à la normale locale à ce plan.

Par ailleurs, les modes de réalisation préférés de l'invention illustrés sur les figures ont également en commun que les facettes 14 sont toutes planes et orientées en oblique par rapport à la surface extérieure 10 du réflecteur, considérée dans son ensemble. Cependant, l'invention n'est pas limitée à cet agencement et couvre également les cas où au moins certaines des facettes 14 sont incurvées et où certaines des facettes sont orientées parallèlement à la surface extérieure 10 du réflecteur, considérée dans son ensemble.

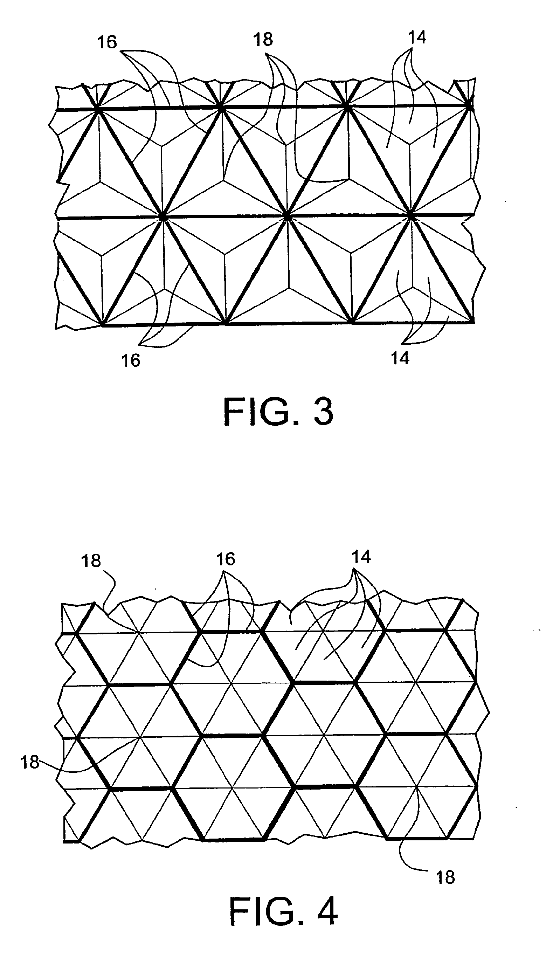

Comme l'illustrent plus précisément les figures 2 à 4, les facettes 14 présentent avantageusement la forme de triangles isocèles dont les bases 16 sont communes à deux facettes adjacentes et dont les sommets 18 sont communs, selon le cas, à quatre (figure 2), trois (figure 3) ou six (figure 4) facettes 14 adjacentes.

Les facettes 14 forment ainsi, sur la surface extérieure 10 du réflecteur, des éléments saillants à bases polygonales, disposés selon un réseau régulier sur ladite surface extérieure.

Dans le cas de la figure 2, ces éléments saillants ont une base carrée et chacun d'entre eux est formé par la juxtaposition de quatre facettes triangulaires 14.

Dans le cas de la figure 3, les éléments saillants ont une base en forme de triangle équilatéral et chacun d'entre eux est formé par la juxtaposition de trois facettes triangulaires 14.

Enfin, dans le cas de la figure 4, les éléments saillants ont une base en forme d'hexagone et chacun d'entre eux est formé par la juxtaposition de six facettes triangulaires 14.

La taille des éléments saillants formés par les facettes 14 peut être millimétrique ou décimétrique, étant entendu que toutes les tailles intermédiaires sont également possibles. La limite inférieure est déterminée afin d'éviter tout risque de diffraction de là lumière solaire.

Il est à noter que les bases 16 et les sommets 18 peuvent aussi être constitués par des lignes parallèles entre elles, généralement droites. Dans ce cas, les facettes 14 ne sont plus triangulaires mais en forme de bandes planes inclinées par rapport à la surface extérieure 10 du réflecteur, considérée dans son ensemble, de façon à former des éléments saillants à section en forme de V.

Comme on l'a représenté plus en détail sur la figure 1, un panneau réflecteur solaire de surface selon l'invention comprend une structure support 20, sur laquelle sont collés des réflecteurs solaires de surface élémentaires. Ces réflecteurs sont formés, sur leurs faces extérieures (facettes 14) d'une couche d'un matériau 22 tel que du verre, transparent au rayonnement solaire et, sur leurs faces intérieures, d'une couche de métallisation réfléchissante 24. Si les dimensions le permettent, la couche de métallisation 24 et la couche 22 de matériau transparent sont déposées par évaporation sous vide.

Le rayonnement solaire est donc renvoyé vers l'extérieur sans provoquer un échauffement autre que celui lié aux pertes de transmission dans le verre et aux pertes en réflexion sur la couche métallique. La chaleur du satellite est transmise, par conduction thermique, de la surface intérieure 12 du réflecteur à la structure support 20, puis à la surface extérieure 10, où elle peut rayonner dans l'espace de manière lambertienne.

La structure support 20 peut être réalisée en tout matériau présentant les caractéristiques mécaniques et optiques requises. Ce matériau peut notamment être un métal, un alliage métallique ou un matériau composite.

La couche 22 de matériau transparent est habituellement du verre, déposé sur la couche de métallisation 24.. La couche 22 de matériau transparent peut aussi être supprimée.

La structure support 20 est généralement réalisée en verre, de façon à minimiser les contraintes mécaniques avec la couche 22 de matériau transparent lors des variations de température.

Lorsque la couche 22 de matériau transparent est supprimée, la structure support 20 peut être réalisée en un autre matériau tel que du polytétrafluoréthylène.

Les couches de métallisation 24 sont réalisées par exemple en argent, en aluminium ou en tout autre métal ou alliage métallique présentant un bon coefficient de réflexion dans la bande spectrale du soleil.

Le dépôt des couches de métallisation 24 sur les couches 22 de matériau transparent peut être fait par tout moyen connu de l'homme du métier, tel que le dépôt par évaporation sous vide, sans sortir du cadre de l'invention.

Dans le mode de réalisation préféré de l'invention représenté schématiquement sur les figures 1 et 2, les élément saillants formés par les facettes 14 sont des pyramides à base carrée dont l'angle au sommet, en coupe selon un plan médian parallèle aux bases 16 et passant par le sommet 18, est sensiblement égal à 90°. Cet agencement est adapté au cas où les rayons solaires heurtent le réflecteur avec un angle d'incidence compris entre 45° et 90° par rapport à la normale locale à la surface intérieure 12 du réflecteur.

Dans le cas d'un satellite géostationnaire où les rayons solaires heurtent le réflecteur avec un angle d'incidence compris entre 60° et 90°, les angles au sommet des pyramides à base carrée formées par les facettes 14 peuvent être plus aigus et valent 60°.

Au contraire, lorsque les rayons solaires heurtent le réflecteur avec un angle d'incidence compris entre 30° et 90°, les angles au sommet des pyramides à base carrée formées par les facettes 14 sont plus obtus et valent 120°.

Par rapport à un réflecteur optique de l'art antérieur, présentant une surface extérieure plane, un réflecteur ainsi réalisé permet d'augmenter d'un facteur 2,82 la surface effective du réflecteur exposée au vide froid. En contrepartie, on crée des couplages thermiques entre les facettes 14. Ainsi, l'émissivité thermique du réflecteur atteint des valeurs proches de 1, c'est-à-dire comprises entre 0,95 et 0,99, sans que le volume et la masse dudit réflecteur soient augmentés de façon significative.

Par ailleurs, la surface exposée à la lumière solaire n'augmente pas significativement par rapport à un réflecteur optique plan de l'art antérieur. Cette surface reste donc marginale et le coefficient d'absorption du réflecteur n'est pas augmenté de façon sensible par rapport à l'art antérieur. De plus, dans le cas de la lumière solaire qui vient heurter les réflecteurs placés sur les faces à l'équinoxe du satellite, les trajets dans le verre sont plus courts et les absorptions sont donc moindres.

Comme on l'a représenté en vue de dessus sur les figures 3 et 4, au lieu d'avoir une base carrée, les pyramides en saillie formées par les facettes 14 peuvent aussi avoir une base en forme de triangle équilatéral ou en forme d'hexagone régulier sans sortir du cadre de l'invention. La forme des bases des éléments saillants peut aussi être celle d'un losange ou d'un triangle isocèle, sans sortir du cadre de l'invention.

Les modes de réalisation qui viennent d'être décrits en référence aux figures 1 à 4 permettent d'optimiser les capacités radiatives du radiateur. En variante, les éléments saillants en forme de pyramides peuvent être séparés par des facettes 14 parallèles à la surface intérieure 12 du réflecteur. Les capacités radiatives sont alors moins bonnes que dans le cas des figures mais restent très supérieures à celles des réflecteurs de l'art antérieur.

Il est à noter, enfin, que le réflecteur conforme à l'invention peut intégrer des éléments extérieurs tels que des caloducs. Ils présentent alors une structure hybride différente de celle qui apparaît sur les figures. Un gain de 12 à 15 % de surface radiative par rapport à l'art antérieur est également possible dans ce cas.

## Revendications

1. Réflecteur optique de surface apte à former une paroi extérieure d'engin spatial, comprenant une surface extérieure (10) prévue pour être tournée vers l'espace et une surface intérieure (12) prévue pour être tournée vers l'engin, **caractérisé en ce que** la surface extérieure (10) comprend une pluralité de facettes (14), inclinées les unes par rapport aux autres et par rapport à ladite surface intérieure (12) et lesdites facettes (14) forment entre elles des angles tels que les rayons solaires incidents ne subissent qu'une seule réflexion sur lesdites facettes (14).

2. Réflecteur optique de surface selon la revendication 1, dans lequel chacune des facettes (14) comprend une couche (22) de matériau transparent aux rayonnements solaires, dont une face intérieure prévue pour être tournée vers l'engin est recouverte par une couche de métallisation (24).

3. Réflecteur optique de surface selon la revendication 2, dans lequel chacune des facettes (14) comprend une couche de métallisation (24) choisie dans le groupe comprenant l'argent et l'aluminium.

4. Réflecteur optique de surface selon la revendication 3, dans lequel chacune des facettes (14) comprend de plus une couche (22) de matériau transparent au spectre solaire.

5. Réflecteur optique de surface selon l'une quelconque des revendications 1 à 4, dans lequelles facettes sont fixées sur un substrat servant de support intérieur (22), réalisé en un matériau choisi dans le groupe comprenant le verre et le polytétrafluoréthylène.

6. Réflecteur optique de surface selon l'une quelconque des revendications 1 à 5, dans lequel les facettes (14) sont sensiblement planes.

7. Réflecteur optique de surface selon l'une quelconque des revendications 1 à 6, dans lequel les facettes (14) forment des éléments saillants à base polygonale, disposés selon un réseau régulier sur ladite surface extérieure.

8. Réflecteur optique de surface selon la revendication 7, dans lequel la base polygonale des éléments saillants est choisie dans le groupe comprenant les triangles équilatéraux, les carrés, les rectangles, les losanges et les hexagones réguliers.

9. Réflecteur optique de surface selon la revendication 8, dans lequel les éléments saillants sont des pyramides à base carrée.

10. Réflecteur optique de surface selon la revendication 9, dans lequel, les rayons solaires pouvant heurter le réflecteur avec un angle d'incidence compris entre 45° et 90° par rapport à la normale locale à la surface intérieure (12) du réflecteur, l'angle au sommet des pyramides est de 90°.

11. Réflecteur optique de surface selon la revendication 9, dans lequel, les rayons solaires pouvant heurter le réflecteur avec un angle d'incidence compris entre 60° et 90° par rapport à la normale locale à la surface intérieure (12) du réflecteur, l'angle au sommet des pyramides est de 60°.

12. Réflecteur optique de surface selon la revendication 9, dans lequel, les rayons solaires pouvant heurter le réflecteur avec un angle d'incidence compris entre 30° et 90° par rapport à la normale locale à la surface intérieure (12) du réflecteur, l'angle au sommet des pyramides est de 120°.

13. Réflecteur optique de surface selon la revendication 8, dans lequel, les rayons solaires pouvant heurter le réflecteur avec un angle d'incidence compris entre 30° et 90° par rapport à la normale locale à la surface intérieure (12) du réflecteur, l'angle au sommet des pyramides est de 133°.

## Claims

1. Optical surface reflector adapted to form an exterior wall of a spacecraft, said reflector comprising an exterior surface (10) adapted to face out into space and an interior surface (12) adapted to face the spacecraft and being **characterised in that** the exterior surface (10) comprises a plurality of facets (14) inclined to each other and to said interior surface (12) and said facets (14) are at angles to each other such that incident solar rays are reflected only once by said facets (14).

2. Optical surface reflector according to claim 1, in which each of the facets (14) comprises a layer (22) of material transparent to solar radiation and having an interior face adapted to face the spacecraft and covered with a metallisation layer (24).

3. Optical surface reflector according to claim 2, in which each of the facets (14) comprises a metallisation layer (24) chosen from the group comprising silver and aluminium.

4. Optical surface reflector according to claim 3, in which each of the facets (14) further comprises a layer (22) of material transparent to the solar spectrum.

5. Optical surface reflector according to any one of claims 1 to 4, in which facets are fixed to a substrate serving as an interior support (22) and made from a material chosen from the group comprising glass and polytetrafluoroethylene.

6. Optical surface reflector according to any one of claims 1 to 5, in which the facets (14) are substantially plane.

7. Optical surface reflector according to any one of claims 1 to 6, in which the facets (14) form projecting members with a polygonal base and disposed in a regular array on said exterior surface.

8. Optical surface reflector according to claim 7, in which the shape of the polygonal base of the projecting members is chosen from the group comprising equilateral triangles, squares, rectangles, lozenges and regular hexagons.

9. Optical surface reflector according to claim 8, in which the projecting members are pyramids with a square base.

10. Optical surface reflector according to claim 9, in which the angle at the apex of the pyramids is 90° if solar rays are liable to impinge on the reflector at an angle of incidence from 45° to 90° relative to the local normal to the interior surface (12) of the reflector.

11. Optical surface reflector according to claim 9, in which the angle at the apex of the pyramids is 60° if solar rays are liable to impinge on the reflector at an angle of incidence from 60° to 90° relative to the local normal to the interior surface (12) of the reflector.

12. Optical surface reflector according to claim 9, in which the angle at the apex of the pyramids is 120° if solar rays are liable to impinge on the reflector at an angle of incidence from 30° to 90° relative to the local normal to the interior surface (12) of the reflector.

13. Optical surface reflector according to claim 8, in which the angle at the apex of the pyramids is 133° if solar rays are liable to impinge on the reflector at an angle of incidence from 30° to 90° relative to the local normal to the interior surface (12) of the reflector.

## Patentansprüche

1. Optischer Oberflächenreflektor, der in der Lage ist, die Außenwand eines Raumfahrzeugs zu bilden, die eine Außenfläche (10) umfasst, die dem Weltraum zugewandt werden soll, sowie eine Innenfläche (12), die dem Fahrzeug zugewandt werden soll, **dadurch gekennzeichnet, dass** die Außenfläche (10) eine Vielzahl an Facetten (14) umfasst, die in Bezug zueinander und in Bezug auf die genannte Innenfläche (12) geneigt sind, und dass zwischen den genannten Facetten (14) Winkel gebildet werden, so dass die einfallenden Sonnenstrahlen nur einmal durch die genannten Facetten (14) reflektiert werden.

2. Optischer Oberflächenreflektor gemäß Anspruch 1, wobei jede der Facetten (14) eine Schicht (22) aus für Sonnenstrahlen transparentem Material umfasst, deren Innenseite, die dem Raumfahrzeug zugewandt werden soll, mit einer Metallschicht (24) bedeckt ist.

3. Optischer Oberflächenreflektor gemäß Anspruch 2, wobei jede der Facetten (14) eine Metallschicht (24) umfasst, die aus einer Gruppe, bestehend aus Silber und Aluminium, ausgewählt werden kann.

4. Optischer Oberflächenreflektor gemäß Anspruch 3, wobei jede der Facetten (14) außerdem eine Schicht (22) aus einem für das Sonnenspektrum transparenten Material umfasst.

5. Optischer Oberflächenreflektor gemäß einem der Ansprüche 1 bis 4, wobei die Facetten auf einem Substrat befestigt sind, das als Innenträger (22) dient und aus einem Material besteht, das aus einer Gruppe, bestehend aus Glas und Polytetrafluorethylen, gewählt werden kann.

6. Optischer Oberflächenreflektor gemäß einem der Ansprüche 1 bis 5, wobei die Facetten (14) in etwa eben sind.

7. Optischer Oberflächenreflektor gemäß einem der Ansprüche 1 bis 6, wobei die Facetten (14) vorstehende Elemente mit polygonaler Basis bilden, die in einem regelmäßigen Netz auf der genannten Außenfläche angeordnet sind.

8. Optischer Oberflächenreflektor gemäß Anspruch 7, wobei die polygonale Basis der vorstehenden Elemente aus einer Gruppe ausgewählt werden kann, die gleichseitige Dreiecke, Quadrate, Rechtecke, Rauten und regelmäßige Sechsecke umfasst.

9. Optischer Oberflächenreflektor gemäß Anspruch 8, wobei es sich bei den vorstehenden Elementen um Pyramiden mit quadratischer Basis handelt.

10. Optischer Oberflächenreflektor gemäß Anspruch 9, wobei der Winkel an der Spitze der Pyramiden 90° beträgt, wenn die Sonnenstrahlen in einem Einfallswinkel zwischen 45° und 90° in Bezug auf die lokale Senkrechte zur Innenfläche (12) des Reflektors auf den Reflektor treffen.

11. Optischer Oberflächenreflektor gemäß Anspruch 9, wobei der Winkel an der Spitze der Pyramiden 60° beträgt, wenn die Sonnenstrahlen in einem Einfallswinkel zwischen 60° und 90° in Bezug auf die lokale Senkrechte zur Innenfläche (12) des Reflektors auf den Reflektor treffen.

12. Optischer Oberflächenreflektor gemäß Anspruch 9, wobei der Winkel an der Spitze der Pyramiden 120° beträgt, wenn die Sonnenstrahlen in einem Einfallswinkel zwischen 30° und 90° in Bezug auf die lokale Senkrechte zur Innenfläche (12) des Reflektors auf den Reflektor treffen.

13. Optischer Oberflächenreflektor gemäß Anspruch 8, wobei der Winkel an der Spitze der Pyramiden 133° beträgt, wenn die Sonnenstrahlen in einem Einfallswinkel zwischen 30° und 90° in Bezug auf die lokale Senkrechte zur Innenfläche (12) des Reflektors auf den Reflektor treffen.
